# EUROPEAN PATENT APPLICATION

(11) **EP 1 182 657 A2**
(43) Date of publication of application: **27.02.2002**
(21) Application number: 01306884.6
(22) Date of filing: 14.08.2001
(51) Int. Cl.: G11B 20/12, G11B 27/28, H04N 5/926

(54) **Information recording apparatus, information recording method and information recording medium in which recording controlling program is recorded**

(30) Priority: 15.08.2000 JP 2000246322
(71) Applicant: Pioneer Corporation, Tokyo-to (JP)
(72) Inventor: Haino, Nobuo, Pioneer Corporation, Tokorozawa-shi, Saitama-ken (JP); Mitsuki, Kazutaka, Pioneer Corporation, Tokorozawa-shi, Saitama-ken (JP); Ishii, Hidehiro, Pioneer Corporation, Tokorozawa-shi, Saitama-ken (JP); Kawamura, Katsumi, Pioneer Corporation, Tokorozawa-shi, Saitama-ken (JP)
(74) Representative: Haley, Stephen

(57) **Abstract**

The present invention is provided with: an encoder (123) for encoding information with a fixed encoding rate; a system controller (125) for converting the encoded information into format information based on the above recording format; and a pickup (120) for recording the converted format information in a DVD-R (1R). A VOBU (30) is formed so that required time for reproduction of the VOBU in the recording format is a fixed time in association with the encoding rate thereof, the VOB (10) is formed with the number of the VOBU included in the VOB defined as a constant number in the above recording format, address information for indicating a recording position on the DVD-R 1R of the VOBU, in which the required time for reproduction is defined as a fixed time, is generated and the above format information is generated by making the generated address information contained in the VOBU.

## Description

The present invention relates to a technical field of an information recording apparatus, an information recording method and an information recording medium in which a recording controlling program is recorded. More specifically, the present invention relates to a technical field of an information recording apparatus and an information recording method for recording information such that music information, image information or the like in a recording medium and an information recording medium in which a recording controlling program for recording the information is recorded.

In recent years, there is a noticeable trend that a recording capacity is increased in the field of an optical disc. In response to this , an optical disc for reproduction only (DVD), in which a movie or the like is compressed and recorded, has been prevailing.

In this case, the recording system for recording the information such as a movie or the like ( generally, maybe referred to as a content) in the optical disc having a high recording capacity is roughly classified into two systems.

As a first recording system, there is a recording system referred to as authoring system independent of a real time. According to this recording system, reproducing control information (also referred to as navigation information in a standard of the DVD) for controlling a reproducing manner of information to be recorded is formed on a hard disk or the like in advance with respect to all of the information in consideration of a relation between the information and the reproducing control information. Then, the formed reproducing control information and the corresponding information substance (content) are packed to be recorded on an optical disc in a disc-at-once system (postscript recording system).

Additionally, as a second recording system, for example, there is a recording system for receiving the information substance distributed by the television broadcast and recording it on the optical disc along a real time as well as generating reproducing control information or the like in association with the information substance and recording it on the optical disc as a file different from the file of the information substance.

In the above described DVD for reproduction only, the reproducing control information and the corresponding information substance, which are generated independent of a real time based on the authoring system among the above described two systems, are recorded. In this case, the information or the like are not directly recorded in the above described DVD for reproduction only, however, the reproducing control information and the information substance are recorded on a master disc for manufacturing the DVD for reproduction only in large quantities, in which the information or the like are recorded. Then, replica processing is performed by using a stamper disc created on the basis of the master disc, so that the above described DVD for reproduction only will be manufactured in large quantity.

On one hand, in recent years, as a recordable DVD, DVD-R (DVD-Recordable, i.e., a DVD capable of recording only once) and DVD-RW (DVD-Re-Recordable, i.e., a DVD capable of recording in plural times) are manufactured. With respect to the DVD-RW, a video recording standard by use of the above described second recording system is established. Alternatively, with respect to the DVD-R, application standard is planned to be established.

As an optical disc which is popular at present, a CD (Compact Disc), a CD-R (CD-Recordable, i.e., a CD capable of recording only once), a CD-RW (CD-Rewritable, i.e., a CD capable of recording in plural times) and the like are manufactured in addition to the above described respective DVDs. It is general that these respective optical discs are required to be configured so as to be reproduced by one information reproducing apparatus to improve compatibility.

However, comparing the above described DVD for reproduction only with the DVD-R and DVD-RW, in the former DVD for reproduction only, the reproducing control information and the information substance are generated independent of a real time and they are packed to be recorded. On the contrary, in the latter DVD-R and DVD-RW, the reproducing control information and the information substance are generated along a real time and they are recorded as an independent file. Therefore, there was a problem such that it is not possible to reproduce the information recorded in the DVD-R and the DVD-RW by using an information reproducing apparatus for reproducing the information on the DVD for reproduction only or it is necessary to make large alteration to the information reproducing apparatus for a DVD for reproduction only in order to reproduce the information recorded in the DVD-R and the DVD-RW.

The present invention has been made taking the problems into consideration, an object of the invention is to provide an information recording apparatus and an information recording method capable of recording information so that they can be also reproduced by an information reproducing apparatus for an optical disc for reproduction only in which the information are recorded independent of a real time, in the case of recording the information in an optical disc along a real time, and an information recording medium in which a recording control program for recording the information is recorded.

The above object of the present invention can be achieved by an information recording apparatus of the present invention for recording information in a recordable recording medium in conformity to a recording format for a reproduction-only recording medium. The apparatus is provided with: an encoding device for encoding said information with a predetermined constant encoding rate and generating encoding information; a converting device for converting said generated encoding information into format information in conformity to said recording format; and a recording device for recording said converted format information in said recordable recording medium; wherein said converting device comprising: a unit information forming device for dividing said encoding information and forming unit information so that required time for reproduction of said unit information after the unit information in said recording format is recorded in said recordable recording medium becomes a constant unit time corresponding to said encoding rate; an upper unit information forming device for forming upper unit information so that the number of said unit information, which is included in said upper unit information comprising a plurality of said unit information in said recording format, becomes a constant number corresponding to said unit time; an address information generating device for generating address information for indicating a recording position on said recordable recording medium of said unit information whose required time for reproduction is said unit time; and a format information generating device for generating said format information so that said generated address information is contained in said unit information.

According to the present invention, the format information is generated in the state that an encode rate of the information is made constant, further, a time required for reproduction of the unit information is made constant and the number of the unit information included in the above described unit information is made fixed. As a result, it is possible to generate and record the address information indicating the encode information which is not recorded yet, in advance, so that it becomes possible to record the information in a recordable recording medium along with a real time based on a recording format, which does not presuppose the information along with a real time.

In one aspect of the present invention, said address information generating device generates said address information contained in said one unit information so as to indicate a recording position on said recordable recording medium of said other unit information to be reproduced back and forth of said one unit information.

According to this aspect, the address information including back and forth recording positions of the unit information is generated. As a result, it becomes possible to record the information so that the reproduction processing on the basis of the address information becomes possible.

In another aspect of the present invention, said recording format is a recording format in conformity to a DVD video standard, said recordable recording medium is a DVD-R, said unit information is a VOBU in said recording format, said upper unit information is a VOB in said recording format, and said address information comprises a navigation pack in said recording format.

According to this aspect, it is possible to reproduce the information recorded in the DVD-R in the information reproducing apparatus for reproducing a disc for reproducing a DVD only, which starts to be popular.

In further aspect of the present invention, said unit time is 0.5 second, and said constant number is 60.

According to this aspect, it is possible to form a VOBU by generating the address information with a simple processing.

The above object of the present invention can be achieved by an information recording method of the present invention for recording information in a recordable recording medium in conformity to a recording format for a recording medium for reproduction only, the method comprising the processes of: encoding said information with a predetermined constant encoding rate and generating encoding information; converting said generated encoding information into format information in conformity to said recording format; and recording said converted format information in said recordable recording medium; wherein said process of converting said generated encoding information comprising the processes of: dividing said encoding information and forming unit information so that the required time for reproduction of said unit information after the unit information in said recording format is recorded in said recordable recording medium becomes a constant unit time in association with said encoding rate; forming upper unit information so that the number of said unit information, which is included in said upper unit information comprising a plurality of said unit information in said recording format, becomes a constant number corresponding to said unit time; generating address information for indicating a recording position on said recordable recording medium of said unit information whose required time for reproduction is said unit time; and generating said format information so that said generated address information contained in said unit information.

According to the present invention, the format information is generated in the state that an encode rate of the information is made constant, further, a time required for reproduction of the unit information is made constant and the number of the unit information included in the above described unit information is made fixed. As a result, it is possible to generate and record the address information indicating the encode information which is not recorded yet, in advance, so that it becomes possible to record the information in a recordable recording medium along with a real time based on a recording format which does not presuppose the information along with a real time.

In one aspect of the present invention, in said address information generating process, said address information contained in said one unit information is generated so as to indicate a recording position on said recordable recording medium of said other unit information to be reproduced back and forth of said present one unit information.

According to this aspect, the address information including back and forth recording positions of the unit information is generated. As a result, it becomes possible to record the information so that the reproduction processing on the basis of the address information becomes possible.

The above object of the present invention can be achieved by an information recording medium of the present invention, in which a recording control program is recorded capable of being read by a recording computer, for functioning said recording computer included in an information recording apparatus for recording information in a recordable recording medium in conformity to a recording format for a recording medium for reproduction only. The recording control program causing the recording computer to function as: an encoding device for encoding said information with a predetermined constant encoding rate and generating encoding information; a converting device for converting said generated encoding information into format information in conformity to said recording format; and a recording device for recording said converted format information in said recordable recording medium; wherein said converting device comprising : a unit information forming device for dividing said encoding information and forming unit information so that the required time for reproduction of said unit information after the unit information in said recording format is recorded in said recordable recording medium becomes a constant unit time corresponding to said encoding rate; an upper unit information forming device for forming said upper unit information so that the number of said unit information, which is included in said upper unit information comprising a plurality of said unit information in said recording format, becomes a constant number in association with said unit time; an address information generating device for generating address information for indicating a recording position on said recordable recording medium of said unit information whose required time for reproduction as said unit time; and a format information generating device for generating said format information so that said generated address information is contained in said unit information.

According to the present invention, a recording computer functions so that an encode rate of the information is made constant and further, a time required for reproduction of the unit information is made constant as well as the number of the unit information included in the above described unit information is made fixed and the format information is generated. As a result, it is possible to generate and record the address information indicating the encode information which is not recorded yet, in advance, so that it becomes possible to record the information in a recordable recording medium along with a real time based on a recording format which does not presuppose the information along with a real time.

In one aspect of the present invention, said address information generating device generates said address information contained in said one unit information so as to indicate a recording position on said recordable recording medium of said other unit information to be reproduced back and forth of said present one unit information.

According to this aspect, the address information including back and forth recording positions of the unit information is generated. As a result, it becomes possible to record the information so that the reproduction processing on the basis of the address information becomes possible.
FIG. 1 is a diagram (I) for illustrating a physical recording format in a DVD video standard;
FIG. 2 is a diagram for illustrating a constitution of a GOP in the DVD video standard;
FIG. 3 is a diagram (II) for illustrating a physical recording format in a DVD video standard;
FIG. 4 is a diagram for illustrating a logical format in the DVD video standard;
FIG. 5 is a diagram for illustrating a plan external view and a physical recording format of the DVD-R;
FIG. 6 is a block diagram for illustrating a schematic constitution of an information recording/reproducing apparatus according to an embodiment of the invention;
FIG. 7 is a flow chart for illustrating the information recording apparatus according to the embodiment;
FIG. 8A is a diagram for illustrating a recording mode of a corresponding DVD for reproduction only;
FIG. 8B is a diagram for illustrating the change in a recording mode in the DVD-R; and
FIG. 9 is a diagram for illustrating transitions of managing data to be recorded in the process of the information recording processing according to the embodiment.

A preferred embodiment of the present invention will be explained with reference to the drawings.

The embodiment to be explained below is applied to an information apparatus , which is on the code of a DVD video standard and records the recording information such as an image or the like in a DVD-R as a recordable recording medium. The DVD video standard is a recording format standard of information of a movie or the like in a DVD for reproduction only (a corresponding standard name is "JIS X6241 120mmDVD reproduction only disc standard").

### (1) Embodiment of DVD video standard

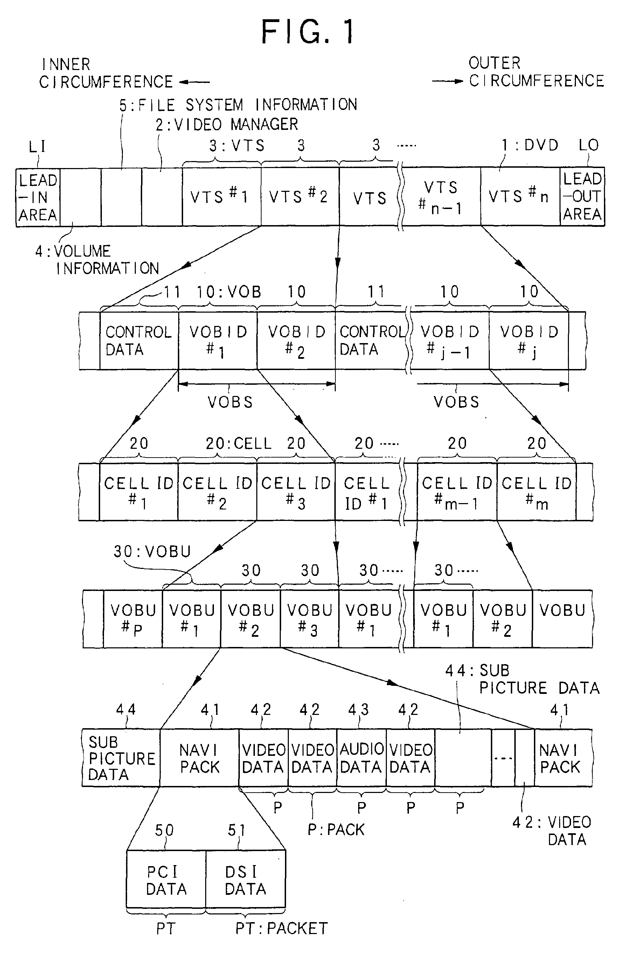

At first, before explaining the embodiment specifically, the above described DVD video standard to be supported as a recording format in the information recording apparatus of the embodiment will be schematically explained with reference to FIGS. 1 to 4.

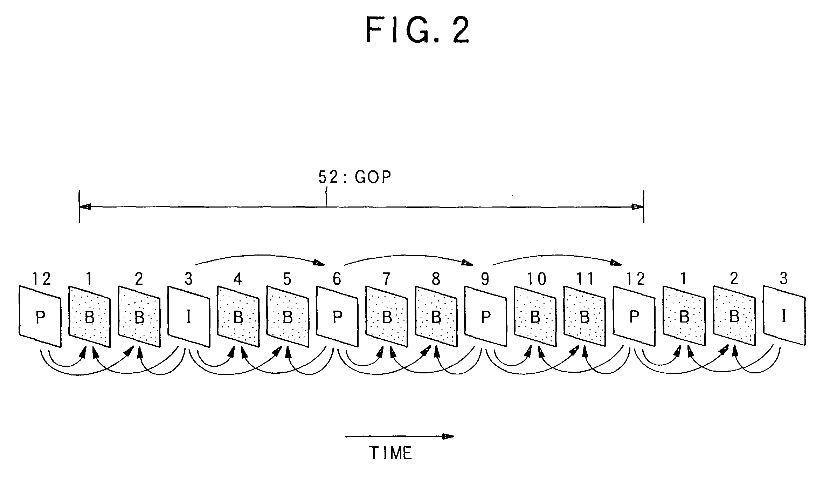

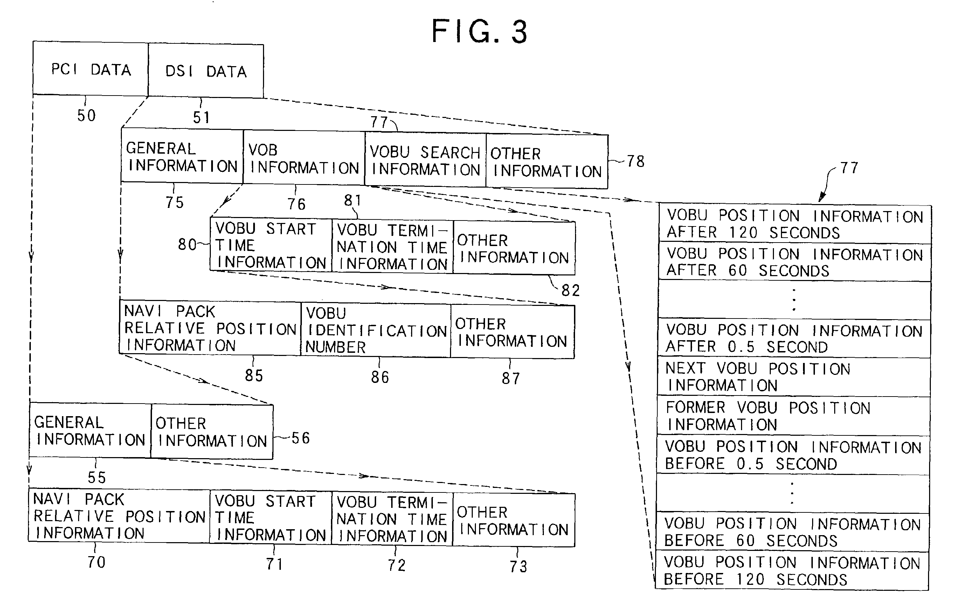

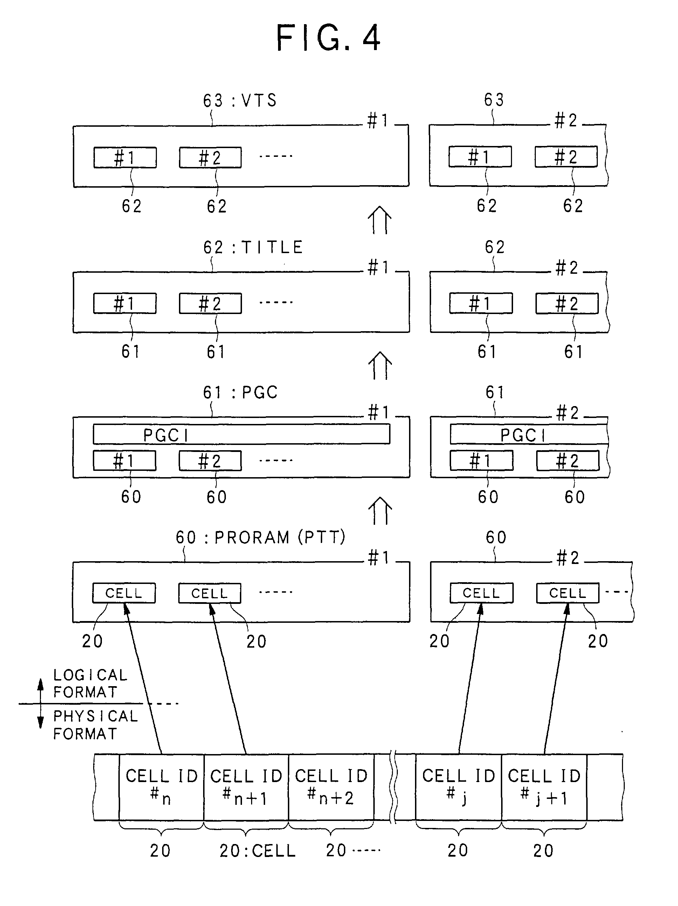

Alternatively, FIG. 1 and FIG. 3 illustrate a physical recording format in the DVD video standard. FIG. 2 illustrates a constitution of a GOP (Group Of Picture) in the DVD video standard. FIG. 4 illustrates a logical format in the DVD video standard.

As shown in FIG. 1, a DVD 1, in which recording information is recorded based on the DVD video standard, has a lead-in area L1 in its innermost circumference as well as has a lead-out area L0 in its outermost circumference. Between the innermost circumference and the outermost circumference, image information and audio information are divided into a plurality of Video Title Sets (VTS) 3 (VTS # 1 to VTS #n) having an ID (identification) number, respectively to be recorded.

In this case, the VTS means a set (a pack) packing relevant titles whose attributions such as the number of sound information and sub-picture information (i.e., the information of a sub-picture such as a subtitle of a movie or the like), a specification, and a corresponding language are identical. The titles are works such as movies , which producers intend to present to viewers. More specifically, for example, a plurality of movies, which correspond to one movie, having scripts of different languages and the like may be recorded in different titles respectively. Further, a movie of a theater version and the corresponding movie of a special version may be recorded in different titles respectively.

Alternatively, just before an area in which a VTS 3 is recorded, a video manager 2 is recorded. VMGI (Video Manager Information) to be recorded as this video manager 2, for example, includes the information involving the whole of the image information and the audio information to be recorded in the DVD 1. For example, the information includes menus indicating the names of respective titles, the information for preventing a illegal copy or an access table for accessing respective titles and backup information for these information and the like.

Further, between the video manager 2 and the lead-in area L1, volume information 4 for identifying the entire information recorded in the DVD 1 and file system information 5 indicating a file configuration of data in the video manager 2 and each VTS 3.

A piece of VTS 3 is divided into a plurality of VOB 10 having ID numbers, respectively, to be recorded with control data 11 as a head. A portion composed of a plurality of VOB 10 is referred to as a VOB set (VOBS). In order to distinguish the control data 11 as other data composing the VTS 3 and a plurality of VOB 10 comprising an substance of the image information and the audio information, the substantial portion is referred to as a VOB set.

In the control data 11 to be recorded in a head of the VTS 3, the information such as PGCI (Program Chain Information) or the like comprising various information with regard to a program chain, which is a logical segment made by combining a plurality of cells (a cell will be described later) and the backup information for it are recorded as VTSI (Video Title Set Information). Alternatively, in each VOB 10, an substantial portion of the image information and the audio information (i.e., the image or the audio itself other than the control information) is recorded in addition to the control information.

Further, one piece of VOB 10 is composed of a plurality of cells 20 having an ID number, respectively. One piece of VOB 10 must be composed of integral multiples of the cells 20, so that one cell 20 is not shared by two pieces of VOB 10.

One cell 20 is composed of a plurality of VOB units (VOBU) 30 having an ID number, respectively. The VOB unit 30 means unit information including each of the image information, the audio information and the sub picture information.

Then, one VOB unit 30 is composed of: a navigation pack 41 (hereinafter, simply referred to as a navi pack) in which the control information to control the data or the like included in the VOB unit 30 is stored; video data 42 as the image information; audio data 43 as the audio information and sub picture data 44 as the sub picture information. Only the image data is recorded as the video data 42, and only the audio data is recorded as the audio data 43. Alternatively, as the sub picture data 44, Only graphic data such as characters , a graphic as the sub picture are recorded. It is defined in the standard that there are eight kinds of audios capable of being recorded in the DVD 1 and there are thirty two kinds of the sub pictures capable of being recorded.

Alternatively, the reproduction time (the reproduction time corresponding to the data recorded between one navi pack 41 and a navi pack 41 adjacent to this one navi pack 41) in response to one VOB unit 30 is recorded so as to have a length in the range of not less than 0.4 second and not more than 1.0 second. Therefore, the navi pack 41 is definitely detected one time in the range of 0.4 second to 1.0 second upon reproduction.

Additionally, in one VOB unit 30, the navi pack 41 should be located at a head thereof. However, each of the video data 42, the audio data 43 and the sub picture data 44 is not needed to be located in the VOB unit 30. Alternatively, if they are located in the VOB unit 30, the number and the order thereof may be arbitrarily set.

A segment of each of the video data 42, the audio data 43 and the sub picture data 44 shown in FIG. 1 is generally referred to as a pack P.

In other words, the video data 42, the audio data 43 and the sub picture data 44 are respectively divided into a pack P to be recorded in one VOB unit 30. Further, the pack P in which the video data 42 is recorded is referred to as a video pack, the pack P in which the audio data 43 is recorded is referred to as an audio pack, and the pack P in which the sub picture data 44 is recorded is referred to as a sub picture pack. Further , read-out starting time information referred to as a SCR (System Clock Reference) is recorded in a back header to be recorded in the head of each pack P. The SCR indicates a read-out start time on a reproduction time axis when the input in respective buffers should be started by reading out the data included in each pack P from a track buffer in the information reproducing apparatus for reproducing the information recorded in the DVD 1. Alternatively, the video data 42, the audio data 43 or the sub picture data 44 is normally recorded in the above described each pack P for every packet as a recording unit obtained by further subsectioning the pack P. However, according to the DVD 1 of the present embodiment, one pack P is generally composed of one packet.

Finally, the navi pack 41 is composed of DSI data 51 comprising retrieval information for retrieving the image, the audio or the like to be reproduced and displayed (specifically, an address or the like on the DVD 1 in which the image, the audio or the like to be reproduced and displayed), and PCI data 50 comprising the information in relation to the reproduction displaying control upon displaying the image or the audio retrieved on the basis of the DSI data 51. The DSI data 51 and the PCI data 50 compose a DSI packet and a PCI packet as a packet PT, respectively, then, they are recorded.

Further, all of the video data 42 included in one VOB unit 30 are composed of one or plural Groups of Picture (GOP).

The DSI data 51 and the PCI data 50 will be described in detail later.

Alternatively, the PCI data 50 includes highlight information that defines the indication and the operation when the viewer selects a certain alternative item. Depending on the highlight information, for example, the change of the screen display with respect to the item selection in an image which displays the items to be selected by the viewer (menu screen), a display position to be changed in accordance with the selection, a command for the selected item (i.e., a command for indicating the operation to be carried out to the selected item) and the like are set.

The image information for displaying a frame, a selection button and the like, which are necessary for composing a menu image and displaying it, is recorded as the sub picture data 44 as the above described sub image information.

Additionally, the above described GOP is the minimum image unit by itself, which is defined in the MPEG (Moving Picture Expert Group) 2 system as an image compression system employed upon recording the image information in the DVD 1 of the present invention. In a head of each GOP, reproduction display time information referred to as a PTS (Presentation Time Stamp) is recorded to indicate the reproduction time on the reproduction time axis when the video data 42 included in the GOP should be displayed.

The summary of the MPEG 2 system will be explained below. Generally, there are many cases such that frame images located back and forth of one piece of frame image are similar each other and have a mutual relation in continuous frame images . The MPEG 2 system has views upon the point. In the MPEG 2 system, based on a plurality of frame images to be transferred at interval of some frames, another frame image existing among the plurality of frame images is generated by an interpolation calculation on the basis of a moving vector or the like of an original image. In the case, when recording another frame image, only by recording the information with regard to the difference among the plurality of frame images and the moving vector, it becomes possible to predict another frame image with reference to the recorded information and to reproduce another frame image upon reproduction. Therefore, it becomes possible to compress and record the image.

Further, the summary of the above described GOP will be explained with reference to FIG. 2. FIG. 2 illustrates an example of a plurality of frame images composing one GOP. FIG. 2 shows that one GOP 52 is composed of twelve pieces of frame images (the number of frame images included in one GOP 52 is not fixed in the MPEG 2 system). In the frame images, a frame image indicated by a reference numeral "I" is referred to as an I picture (Intra-coded picture) and it means a frame image capable of reproducing a complete frame image only by its own image. Alternatively, a frame image indicated by a reference numeral "P" is referred to as a P picture (Predictive-coded picture) and it means a predictive image generated by decrypting the difference among the compensated and reproduced predictive images or the like on the basis of the decrypted I picture or another P picture. Alternatively, a frame image indicated by a reference numeral "B" is referred to as a B picture (Bidirectionally predictive-coded picture) and it means a predictive image reproduced by using not only the decrypted I picture or P picture but also a future I picture or a future P picture recorded in an optical disc or the like for prediction. In FIG. 2, a predictive relation (interpolation relation) among respective pictures is represented by an arrow.

Alternatively, a general MPEG 2 system used in the DVD 1 according to the present invention employs a variable rate system in which the data amount included in each GOP 52 is not fixed. In other words, respective pictures included in one GOP 52 correspond to a moving image with rapid movement, so that in the case that the mutual relation between respective pictures is small, the data amount for composing respective pictures becomes large. Accordingly, the data amount included in one GOP 52 also becomes large. On the other hand, respective pictures included in one GOP 52 correspond to a moving image with less movement, so that in the case that the mutual relation between respective pictures is large, the data amount for composing respective pictures becomes small and the data amount included in one GOP 52 also becomes small.

In a recording format having a hierarchical structure described in the above with reference to FIG. 1, respective segments are freely set by a manufacture in accordance with his or her intention to be recorded. By reproducing the information on the basis of a logical structure to be explained later for every segment, it is possible to carry out various and varied reproduction.

A physical data structure of the above described DSI data 51 and the PCI data 50 will be described with reference to FIG. 3.

At first, as shown in FIG. 3, the PCI data 50 is comprised of general information 55 as the PCI data 50 itself and the other information 56 as the rest information.

Further, the general information 55 is composed of: navi pack relative position information 70 as relative recording address information from ahead of the VOB 10 of the above described navi pack 41; VOBU reproduction start time information 71 for indicating a reproduction start time on the reproduction time axis of the VOB unit 30 in which this navi pack 41 is included; VOBU reproduction termination time information 72 for indicating a reproduction termination time on the reproduction time axis of the VOB unit 30; and other information 73 as the rest information.

The DSI data 51 is comprised of: general information 75 as the DSI data 51 itself; VOB information 76 as the information relevant to the VOB 10 to which the navi pack 41 belongs; VOBU search information 77 for indicating recording position on the DVD 1 of other VOB units 30 to be reproduced before and after the VOB unit 30 to which the navi pack 41 belongs is reproduced, and other information 78 as the rest information.

Then, the general information 75 is comprised of: navi pack relative position information 85 similar to the above described navi pack relative position information 70, VOBU identification number 86 for identifying the VOB unit 30 to which the navi pack 41 belongs, and other information 87 as the rest information.

Further, the VOB information 76 is comprised of: VOBU reproduction start time information 80 for indicating the reproduction start time on the reproduction time axis of the VOB 10 to which VOB unit 30 including the navi pack 41 belongs; VOBU reproduction termination time information 81 for indicating the reproduction termination time on the reproduction time axis of the VOB 10; and other information 82 as the rest information.

Still further, as the VOBU search information 77, as shown in FIG. 3, the position information is included as a list to indicate the position information for indicating a recording position on the DVD 1 of the VOB unit 30 next to the VOB unit 30 to which the navi pack 41 belongs, and a recording position on the DVD 1 of the VOB unit 30 one previous to the VOB unit 30 to which the navi pack 41 belongs, and the position information for indicating recording positions on the DVD 1 of other VOB units 30 to be reproduced in the range of 120 seconds after the start time of the VOB unit 30 to 120 seconds before the start time of the VOB unit 30.

A logical format (a logical structure) obtained by combining the information recorded by the physical segments shown in FIG. 1 or FIG. 3 will be explained with reference to FIG. 4. Alternatively, in the logical format shown in FIG. 4, the information is not actually recorded on the DVD 1, but the information (the access information, the time information or the like) for combining each data (specifically, the cell 20) shown in FIG. 1 and reproducing it in the logical structure shown in FIG. 4 is recorded on the DVD 1, specifically, in control data 11.

For a clear explanation, the explanation will be given from a lower hierarchy in FIG. 4. By selecting a plurality of cells 20 and combining them in the physical structure explained above in FIG. 1, one program 60 is logically composed on the basis of the manufacture's intention. The program 60 is also the minimum logical unit capable of being accessed in such a manner that a system controller in the above described information reproducing apparatus identifies the segment and uses a command. Alternatively, the manufacture may also define the program 60 as the minimum unit such that the viewer can freely select one cell 20 or packed plural cells 20 and views them. The unit is referred to as a PTT (Part of Title).

Alternatively, since one program 60 is logically composed by selecting a plurality of cells 20, it is also possible to use one cell 20 in a plurality of programs 60, in other words, so called redundant use of the cell 20 such that one cell 20 is reproduced in different and plural programs 60 is possible for the manufacturer.

The number of one cell 20 is treated as a cell ID number (it is represented by a cell ID# in FIG. 1)upon treating the cell 20 in the physical format shown in FIG. 1. On the other hand, the number of one cell 20 is treated as a cell number in the order of the description in a PGCI to be described later upon treating the cell 20 in the physical format shown in FIG. 4.

One PGC (Program Chain) 61 is logically composed on the basis of the manufacture's intention by combining a plurality of programs 60. In the unit of the PGC 61, the above described PGCI is defined. The present PGCI includes : a reproduction order of the cells 20 for each program 60 upon reproducing respective programs 60 (a specific program number is assigned for every program 60 by this reproduction order); an address as a recording position on the DVD 1 of respective cells 20; the number of a head cell 20 to be reproduced in one program 60; a reproduction system of respective programs 60; and various commands ( a command capable of being designated by the manufacture for every PGC 61 or every cell 20). When recording the information in the DVD 1 according to the present embodiment, the manufacturer selects any one of reproduction methods among a normal reproduction, a random reproduction and a shuffle reproduction for every PGC 60 to reproduce the program 60 upon reproduction. The random reproduction is performed by using random numbers, so that the same program 60 may be possibly reproduced in plural times. The shuffle reproduction is also a random reproduction using random numbers similar to the above random reproduction, however, the program 60 is reproduced only once so that the same program 60 is not reproduced in plural times.

Alternatively, the recording position of the PGCI on the DVD 1 is located within the control data 11 (refer to FIG. 1) as described above. However, in the case that the PGCI is related to a menu within the video manager 2, the recording position of the PGCI is locatedwithin the control data (not shown) included in the video manager 2.

Alternatively, one PGCI 61 may include the data such as a substantial image, an audio and the like as a combination of the programs 60 (in other words, a combination of the cells 20) in addition to the above described PGCI.

Further, in one PGC 61, it is also possible to redundantly use the cell 20 as described in the explanation of the program 60 (namely, the same sell 20 is used by the different PGC 61). Alternatively, the manufacturer is capable of selecting a method (a method for reproducing uncontinuously arranged cells) for reproducing the cells 20 regardless of the order that the cells 20 (for example, previously reproducing the cell 20 recorded lately or the like) are stored in the DVD 1 in addition to a method for reproducing the cells 20 in the order that they are stored in the DVD 1 (a method for reproducing continuously arranged cells) with respect to the cell 20 to be used.

One title 62 is logically composed of one or a plurality of PGC 61. For example, the title 62 is a unit corresponding to one piece of movie and the title 62 is information which the manufacturer wishes to provide to the viewer of the DVD 1.

Then, one VTS 63 is logically composed of one or plural titles 62. This titles 62 included in the VTS 63 have common attribute, respectively. For example, with respect to one and the same movie, the movies having different languages correspond to respective titles 62. Alternatively, the information corresponding to one VTS 63 shown in FIG. 4 corresponds to the information included in one VTS 3 shown in FIG. 1. In other words, all information logically included in the VTS 63 shown in FIG. 4 are recorded in the DVD 1 as one VTS 3.

On the basis of the above described logical format, the manufacturer designates the information segmented in the physical structure, so that the title (a movie or the like) to be viewed by the viewer is formed.

### (II) Embodiment of DVD-R

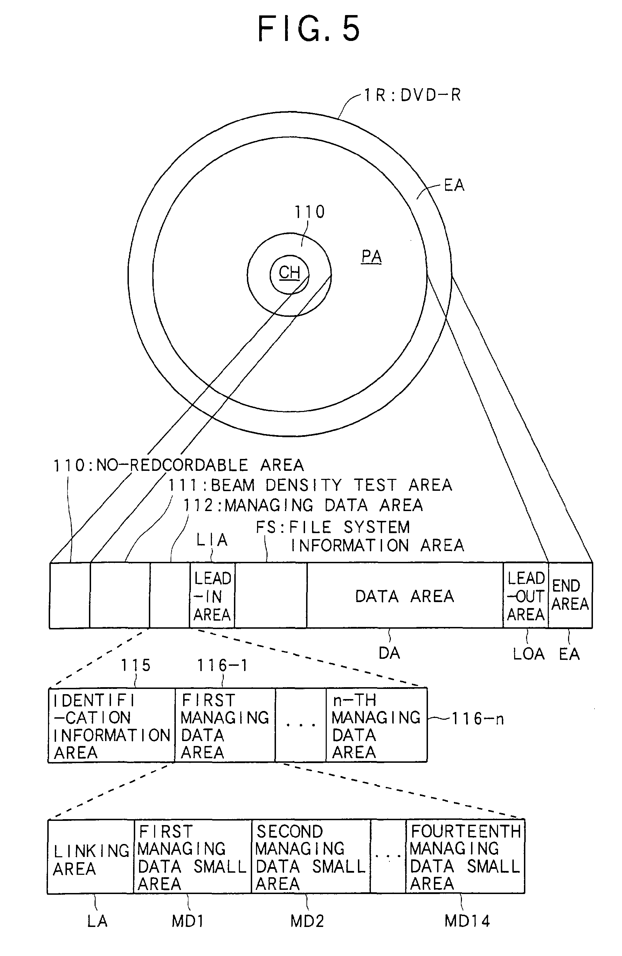

A DVD-R according to the present embodiment, in which the recording information is recorded by the information recording apparatus, will be described with reference to FIG. 5.

FIG. 5 illustrates a plan external view and a physical recording format of the DVD-R according to the present embodiment.

The DVD-R according to the present embodiment comprises an optical disc capable of recording only once with a color membrane as a recording membrane. In a plan external view, the DVD-R has a center hall CH at a center thereof to fix the DVD-R in a spindle motor for rotating the DVD-R in the information reproducing apparatus or the information recording apparatus. The DVD-R further has a no-redcordable area 110 not capable of recording the recording information from the inside thereof to the inner circumference, a redcordable area PA capable of recording the recording information and an end area EA not capable of recording the recording information in the outer circumference side.

Further, the redcordable area PA is composed of: a beam density test area 111 in which the test information for setting the density of the optical beam to be used for recording the recording information is recorded; a managing data area 112 in which the data of the set optical beam density and the managing data to be described later in the recording process are recorded; a lead-in area LIA in which the start information or the like to be read out upon starting the reproduction of the recorded recording information are recorded in the recording process of the recording information; a file system information area FS in which the file system information is recorded as the information for indicating a file structure in the recording information; a data area DA in which the recording information is recorded in practice; and a lead-out area LOA in which the termination information or the like to be read out upon terminating the reproduction of the recorded recording information are recorded in the recording process of the recording information.

Alternatively, the managing data area 112 is composed of an identification information area 115 in which the identification information for identifying the DVD-R 1R itself from other DVD-Rs is recorded, and a first managing data area 116₋₁ to an n-th managing data area 116₋ₙ in which the managing data necessary in the recording process of the recording information to be described later is recorded every when it is updates. The maximum value of the above n is "699".

Further, one managing data area 116 is composed of a linking area LA in which the information with regard to the connection to the adjoining managing data area is recorded and fourteen pieces of managing data small areas MD, namely, a first managing data small area MD1 to a fourteenth managing data small area MD14 in which the information composing a portion of respective managing data areas 116 is recorded, respectively, as described later.

### (III) Embodiment of information recording/reproducing apparatus

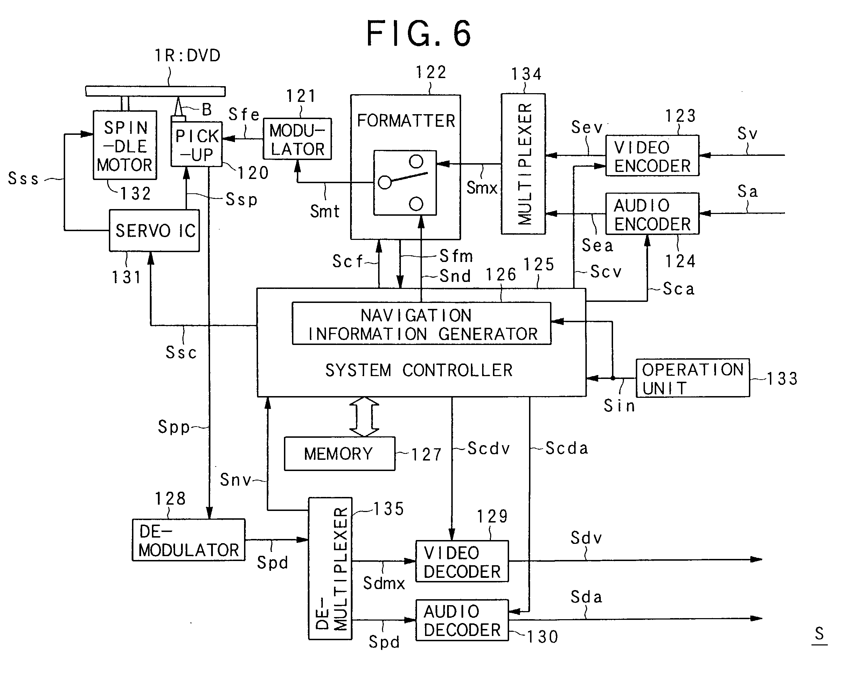

An information recording/reproducing apparatus for recording the recording information along with a real time in a DVD-R 1R or a DVD-RW based on the above described DVD video standard as well as reproducing the recorded information from the DVD-R 1R or the DVD-RW according to the present embodiment will be described with reference to FIGS. 6 to 9.

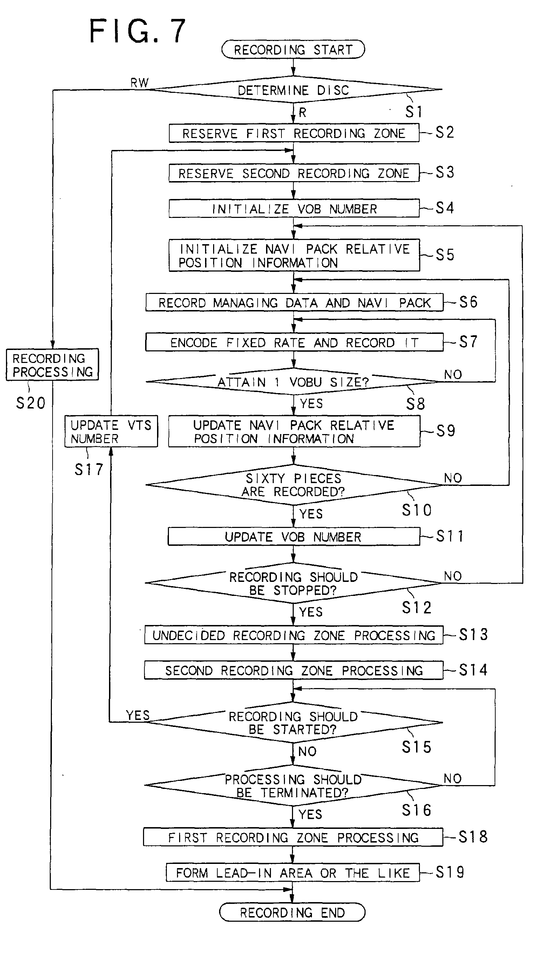

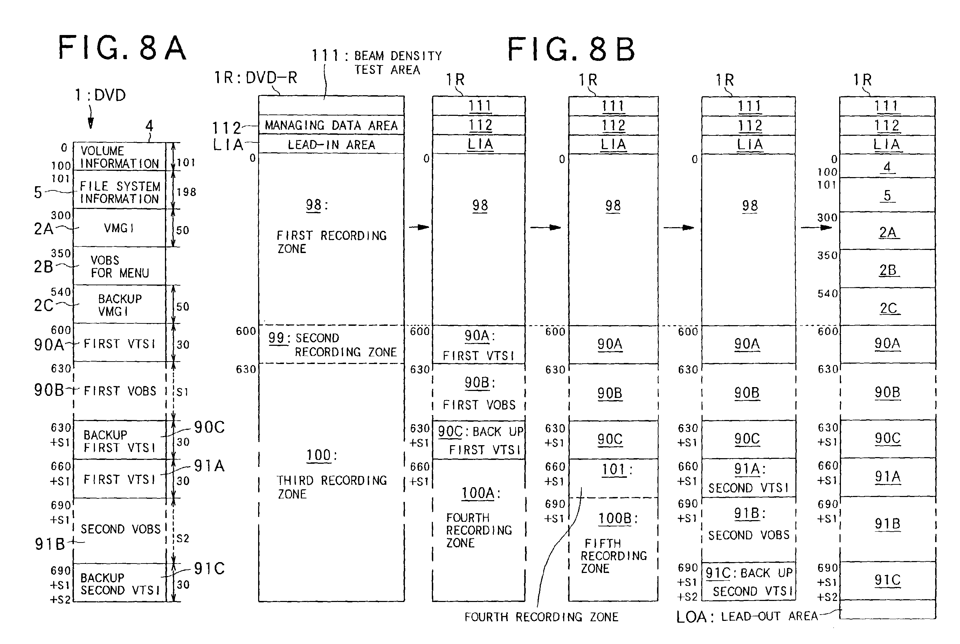

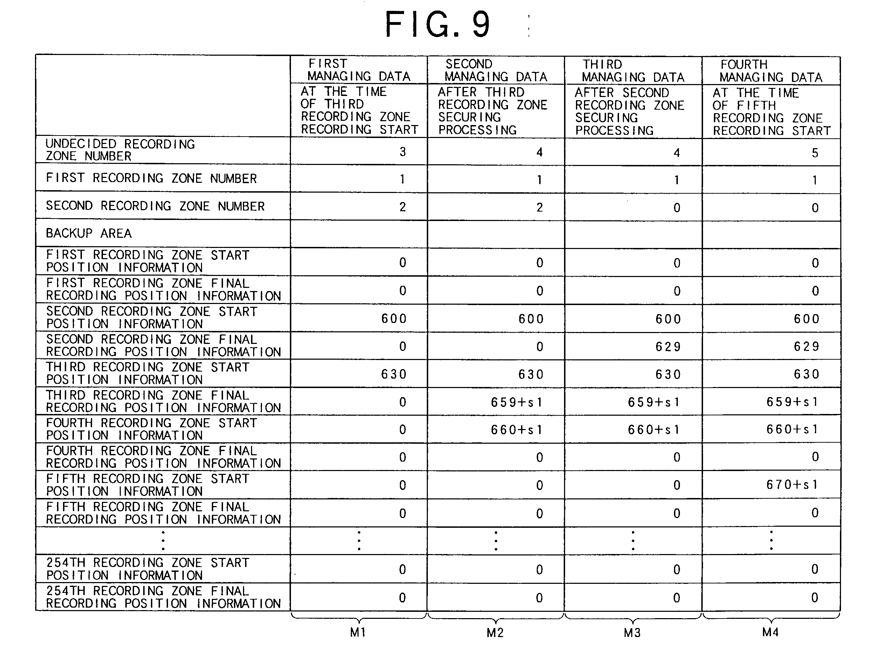

Alternatively, FIG. 6 is a block diagram for illustrating a schematic constitution of an information recording/reproducing apparatus according to the present embodiment. FIG. 7 is a flow chart for illustrating the information recording processing according to the present embodiment. FIG. 8 is a diagram for illustrating the change of the DVD-R 1R in the process of the information recording processing according to the present embodiment. FIG. 9 is a diagram for illustrating transitions of the above described managing data to be recorded in the process of the information recording processing.

As shown in FIG. 6, an information recording/reproducing apparatus S according to the present embodiment is provided with a pickup 120 as a recording device, a modulation unit 121, a formatter 122, a video encoder 123 as an encoding device, an audio encoder 124, a system controller 125 as a converting device, a unit information forming device, an upper unit information forming device and a format information generating device, a memory 127, a demodulation unit 128, a video decoder 129, an audio decoder 130, a servo IC (Integrated Circuit) 131, a spindle motor 132, an operating unit 133, a multiplexer 134 and a demultiplexer 135. Alternatively, the system controller 125 is provided with a navigation information generator 126 as an address information generation device for generating the above described navi pack 41 or the like.

The schematic operation of respective units will be explained.

At first, the spindle motor 132 rotates the loaded DVD-R 1R in a predetermined rotation speed on the basis of a spindle control signal Sss from the servo IC 131.

On one hand, video information Sv as the recording information to be recorded in a data area DA of the DVD-R 1R is inputted in the video encoder 123 after it is inputted from the outside.

Then, the video encoder 123 executes an encoding processing with a fixed encoding rate set in advance with respect to the video information Sv on the basis of the control signal Scv from the system controller 125, generates an encoded video signal Sev and outputs it to the multiplexer 134. Specifically, for example, the encoding processing is one in the above described MPEG 2 system and using an encoding rate such that the reproduction time of one VOB unit 30 is 0.5 second. The 0.5 second is a time corresponding to the reproduction time of fifteen video frames in the NTSC (National Television System Committee) system.

On the other hand, audio information Sa as the recording information to be recorded in the data area DA of the DVD-R 1R is inputted in the audio encoder 124 after it is inputted from the outside.

Then, the audio encoder 124 executes an encoding processing with a fixed encoding rate set in advance with respect to the audio information Sa on the basis of the control signal Sca from the system controller 125, generates an encoded audio signal Sea and outputs it to the multiplexer 134. Specifically, for example, the encoding processing is one in the above described MPEG 2 system and using an encoding rate such that the reproduction time of one VOB unit 30 is 0.5 second as in the case of the vide information Sv.

Therefore, the multiplexer 134 superposes (or multiplexes) the image information and the audio information included in the encoded video signal Sev by a predetermined processing, generates a superposed signal Smx and outputs it to the formatter 122.

The multiplexer 134 makes the above described encoded audio signal Sea pass as it is and makes it into the superpose signal Smx.

The formatter 122 combines navigation information signal Snd to be described later from the navigation information generator 126 and the above described superposed signal Smx so as to be a system of the physical format shown in FIG. 1 or FIG. 3 on the basis of a control signal Scf from the system controller 125. Then, the formatter 122 generates a format signal Smt and outputs it to the modulation unit 121.

Respective recording information to be inputted in the formatter 122 as the superposed signal Smx are outputted to the system controller 125 as recording information signal Sfm in a predetermined timing so that they are provided for generating the above navigation information in the navigation information generator 126.

Then, the modulation unit 121 executes a predetermined modulation processing (specifically, for example, so-called 8-16 modulation processing) to the format signal Smt, generates a modulation signal Sfe and outputs it to the pickup 120.

Therefore, the pickup 120 generates an optical beam B, of which density is modulated by the modulation signal Sfe, forms a pit corresponding to the above navigation information included in the modulation signal Sfe, and respective recording information on the information track by irradiating the generated optical beam B on the information track within the information recording surface (not shown) of the DVD-R 1R. Then, the navigation information and respective recording information are recorded on the DVD-R 1R in a system of the physical format shown in FIG. 1 and FIG. 3.

A deviation in a vertical direction with respect to the above information recording surface and a horizontal direction with respect to the above information recording surface between a converge position of the optical beam B and the above information track is solved by moving an objective lens (not illustrated) in the pickup 120 (an objective lens for converging the optical beam B) in the above horizontal direction and the above vertical direction on the basis of the pickup servo signal Ssp to be outputted from the servo IC 131, namely, by performing focus servo control and tracking servo control.

Therefore, the servo IC 131 generates the above spindle control signal Sss and the pickup servo signal Ssp on the basis of a control signal Ssc form the system controller 125 to output them to the spindle motor 132 and the pickup 120, respectively.

On one hand, in the case of reproducing the recording information or the like recorded in the DVD-R 1R in advance, the pickup 120 generates an optical beam B with a predetermined density for reproduction to be irradiated to the information track on which the above pit is formed. Then, on the basis of this reflected light, the pickup 120 generates a detection signal Spp corresponding to the recording information or the like to output it to the demodulation unit 128.

Therefore, the demodulation unit 128 executes the demodulation processing in association with the demodulation processing in the above modulation unit 121 to the detection signal Spp, generates the demodulation signal Spd and outputs it to the demultiplexer 135.

Then, the demultiplexer 135 separates the image information and the audio information included in the video information when the demodulation signal Spd includes the video information, so that it generates a separated signal Sdmx to output it to the video decoder 129.

On one hand, in the case that the demodulation signal Spd includes the audio information, the demultiplexer 135 makes the demodulation signal Spd pass as it is and outputs it to the audio decoder 130.

The video decoder 126 executes the decoding processing corresponding to the encoding processing of the fixed encoding rate in the above video encoder 123 to the separated signal Sdmx on the basis of a control signal Scdv from the system controller 125, generates a decoding video signal Sdv and outputs it to a monitor (not shown) or the like in the outside.

Further, the audio decoder 130 executes the decoding processing corresponding to the encoding processing of the fixed encoding rate in the above audio encoder 124 to the modulation signal Spd including the audio information on the basis of a control signal Scda from the system controller 125, generates a decoding video signal Sda and outputs it to an amplifier (not shown) or the like in the outside.

On the other hand, the operating unit 133 generates an operational signal Sin corresponding to the operation and outputs it to the system controller 125 when the operation for carrying out the recording processing or the reproduction processing in the information recording/reproducing apparatus S is carried out by the user.

Further, the navigation information generator 126 generates the above navigation information signal Snd including the above respective navigation information to be recorded in the DVD-R 1R upon recording processing to be described later on the basis of the control of the system controller 125 based on an operation signal Sin and the recording information signal Sfm and outputs the generated navigation information signal Snd to one of inputting terminals of the formatter 122.

Therefore, the above formatter 122 superposes the recording information in the superpose signal Smx and the navigation information in the navigation information signal Snd, so that the above format signal Smt including the recording information having the physical format shown in FIG. 1 and FIG. 3 is generated.

In parallel with these operations, the system controller 125 generates respective control signals Scv, Sca, Scf, Ssc, Scdv and Scda for controlling the respective operations to output them to the corresponding composing members, respectively, while giving and receiving necessary information to and from the memory 127 as a memory signal Sm.

The information recording processing according to the present embodiment to be carried out mainly by the system controller 125 in the information recording/reproducing apparatus S will be explained with reference to FIGS. 6 to 9.

In the following explanation, a case of recording the recording information in the DVD-R 1R along with a real time so that the recording format is the same as that of the DVD 1 for reproduction only in which two VTSs 3 are recorded as shown in FIG. 8A will be explained.

According to the information recording processing of the present embodiment, as shown in FIG. 7, at first, the classes of the optical disc loaded in the information recording/reproducing apparatus S are determined by a publicly known method (step S1).

Then, in the case that the optical dick of the determined class is a DVD-RW capable of being written in plural times (step S1; RW), the recording processing is carried out to the DVD-RW on the basis of the above described video recording standard (step S20) to terminate the processing.

On one hand, in the determination of the step S1, when the loaded optical disc is the DVD-R 1R (step S1; R), then, as shown in a first diagram from the left in FIG. 8B, a reservation of a first recording zone 98 as an area corresponding to the DVD video standard on the DVD-R 1R is secured (step S2). The first recording zone 98 is an area for recording volume information 4 in the DVD video standard, file system information 5, the above VMG 12A composing the video manager 2, a VOBS 2B for a menu (a VOBS as a collection of the image information and the audio information to display a necessary menu) and the information corresponding to a backup VMGI 2C.

When the reservation of the first recording zone 98 is secured, then, as shown in the left of FIG. 8B, the reservation of a second recording zone 99 as an area corresponding to the DVD video standard on the DVD-R 1R is secured (step S3). The second recording zone 99 is an area for recording the information corresponding to the first VTSI 90A, which is the VTSI corresponding to the first VTS 3 in the DVD video standard.

As a result, the rest recordable area PA after the second recording zone 99 becomes a third recording zone 100, which is undecided.

When the reservation of the first recording zone 98 and the second recording zone 99 has been completely secured, then, a parameter for indicating a number of the VOB 10 to be recorded as the first VTS 3 is initialized on the system controller 125 (step S4). Further, navi pack relative position information to be included in the VOB 10 is also initialized on the system controller 125 (step S5).

When each initialization is terminated, then, first managing data M1 shown in FIG. 9 is recorded within a for thmanaging data small area MD4 in a first managing data area 116₋₁ in a managing data area 112. Therefore, it is recorded that the first recording zone 98 and the second recording zone 99 are reserved (step S6). In the first managing data M1, a head address of the first recording zone 98, i.e., "0h (h represents hexadecimal and so forth")", a head address of the second recording zone 99, i.e., "600h" and a head address of the undecided third recording zone 100, i.e., "630h" are recorded in the corresponding areas, respectively. Alternatively, at the present moment, the final recording positions of the first recording zone 98, the second recording zone 99 and the undecided third recording zone 100 are not decided, so that the all areas corresponding to the final recording positions thereof are assumed to be zero data.

When the recording of the first managing data M1 is completed, then, as the processing in the step S6, a first navi pack 41 as a first VTS 3 is further generated in the navigation information generator 126 to be recorded in the undecided third recording zone 100. Since the encoding processing of the present invention is performed by the fixed encoding rate so that the reproduction time of one VOB unit 30 is always 0.5 second, as a result, the recording positions of respective VOB units 30 are also fixed. Therefore, it is possible to generate and record the navi pack 41 before the substantial portion of the recording information is recorded.

When the recording of the first navi pack 41 is terminated, then, the actual recording information is encoded by the above fixed encoding rate and the encoded information is recorded in the undecided third recording zone 100 followed by the first navi pack 41 (step S7).

Then, it is checked whether or not the encoding processing and the recording processing of the recording information corresponding to one VOB unit 30 are completed (step S8). When they are not completed (step S8; NO), the encoding processing and the recording processing are continuously performed. On the other hand, when the encoding processing and the recording processing of the recording information corresponding to one VOB unit 30 are completed (step S8; YES), a value corresponding to the data amount of one VOB unit 30 is added to a value of the navi pack relative position information till then, the value of the navi pack relative position information is changed to a value of the navi pack relative position information just after it on the system controller 125 (step S9) and further, it is checked whether or not sixty pieces of VOB units 30 are completely recorded (step S10).

Then, when the sixty pieces of VOB units 30 are not completely recorded (step S10; NO), in order to record the next VOB unit 30, the processing is returned to the step S6. On the other hand, when the recording is completed (step S10; YES), the identification number of the VOB 10 will be updated (step S11).

When the above processings are terminated, the VOB 10 including sixty pieces of the VOB units 30, of which reproduction times are all 0.5 second, namely, the reproduction thereof is 30 seconds, is formed in the undecided third recording zone 100.

After the step S11 is terminated, it is checked whether or not the operation for indicating that the recording processing for the DVD-R 1R should be stopped during the above described recording processing (step S12). Then, when the operation is not carried out (step S12; NO), the processing is returned to the above described step S5 to carry out the processing in the above described step S5 to step S11.

On the other hand, when the operation for indicating that the recording processing for the DVD-R 1R should be stopped is carried out (step S12; YES), then, the operation for securing the undecided third recording zone 100 and the second recording zone 99 is carried out (steps S13 and S14).

In this step S13, following the step S11, backup first VTSI 90C, i.e., a second one from the left in FIG. 8B is recorded. After that, second managing data M2 shown in FIG. 9 is recorded within a forth managing data small area MD4 in a second managing data area 116₋₂ in the managing data area 112. Further, the above described first managing data M1 is invalidated. Therefore, it is recorded that a first recording processing for the undecided third recording zone 100 (a first recording processing of the VTS 3) is completed. More specifically, in the second managing data M2, a head address of the first recording zone 98, i.e., "0h", ahead address of the second recording zone 99, i.e., "600h" and a head address of the undecided third recording zone 100, i.e., "630h" are recorded in the corresponding areas, respectively. At the same time, a final address of the backup first VTSI 90C, i.e. , "659 + s1h ("s1" is a volume of the address area occupied by the first VOBS 90B) and a head address of an undecided forth recording zone 100A, i.e., "660 + s1h" are recorded in the corresponding areas, respectively. Alternatively, at the time when the step S13 is terminated, the final recording positions of the first recording zone 98, the second recording zone 99 and the new undecided forth recording zone 100A are not decided, so that the all areas corresponding to the final recording positions thereof are assumed to be zero data.

Then, in the step S13, returning to the second recording zone 99, the first VTSI 90A (having the same content as that of the above described backup first VTSI 90C) is originally recorded. After that, third managing data M3 shown in FIG. 9 is recorded within a forth managing data small area MD4 in a third managing data area 116₋₃ in the managing data area 112. Further, the above described second managing data M2 is invalidated. Therefore, it is recorded that the recording processing for second recording zone 99 (the recording processing of the first VTSI 90A) is completed. More specifically, in the third managing data M3, a head address of the first recording zone 98, i.e., "0h", a head address of the second recording zone 99, i.e., "600h" and a head address of the undecided third recording zone 100, i.e., "630h" are recorded in the corresponding areas, respectively. At the same time, a final address of the backup first VTSI 90C, i.e., "659 + s1h, a head address of an undecided forth recording zone 100A, i.e., "660 + s1h" and a final address of the second recording zone 99 (the recording processing of the first VTSI 90A is completed), i.e. , "629h"are recorded in the corresponding areas, respectively. Alternatively, at the time when the step S14 is terminated, the final recording positions of the first recording zone 98 and the forth recording zone 100A are not decided, so that the all areas corresponding to the final recording positions thereof are assumed to be zero data.

When the processing of the step S14 is terminated, then, it is checked whether or not the new recording processing for the DVD-R1R should be started (step S15). According to the present embodiment, further, the second VTS 3 is recorded (step S15; YES), so that the number of the VTS is updated to "2" in the next place (step S17) and the processing is returned to the above step S3 to carry out the above described steps S3 to S14 for the second VTS 3.

In this series of the processing for the second VTS 3, at first, as shown in a third diagram from the left in FIG. 8B, the reservation of an area (a recording zone) for recording the information corresponding to the second VTSI 91A as the VTSI corresponding to the second VTS 3 in the DVD video standard is secured in the area corresponding to the DVD video standard on the undecided forth recording zone 100A. The area, of which reservation is secured, is defined as a new fourth recording zone 101 (step S3). For a simplified explanation, the reservation securing processing of the fourth recording zone 101 is represented as "a second recording zone reservation" in FIG. 7.

As a result, the rest recordable area PA after the new fourth recording zone 101 is defined as an undecided fifth recording zone 100B.

If the reservation securing of the fourth recording zone 101 is completed, then, the above steps S4 to S13 are carried out, so that the second VOBS 91B, the backup second VTSI 91C and the second VTSI 91A are recorded in this order in the undecided fifth recording zone 100B and the fourth recording zone 101.

Prior to recording the navi pack 41 in the undecided fifth recording zone 100B, fourth managing data M4 shown in FIG. 9 is recorded within a forth managing data small area MD4 in a fourth managing data area 116₋₄ in the managing data area 112. Further, the above described third managing data M3 is invalidated. Therefore, it is recorded that a fourth recording zone 101 is reserved. In the fourth managing data M4, a head address of the first recording zone 98, i.e., "0h", ahead address of the original second recording zone 99 (the first VOBS 90A), i.e., "600h", a head address of the original third recording zone 100 (the first VOBS 90B and the backup first VTSI 90C), i.e. , "630h", a final address of the backup first VTSI 90C, i.e. , "659 + s1h", a head address of the new forth recording zone 101, i.e., "660 + s1h" and the new undecided fifth recording zone 100B, i.e. , "690 + slh" are recorded in the corresponding areas, respectively. Alternatively, at the time when the step S5 is terminated twice, the final recording positions of the first recording zone 98, the fourth recording zone 101 and the new undecided fifth recording zone 100B are not decided, so that the all areas corresponding to the final recording positions thereof are assumed to be zero data.

Further, after the recording in the second VTSI 91A is terminated, the fifth managing data (not shown) indicating the recording position information of respective recording areas is recorded within the forth managing data small area MD4 in a fifth managing data area 116₋₅ in the managing data area 112.

At this time, as shown in the second diagram from the right in FIG. 8B, the above described second VOBS 91B, the backup second VTSI 91C and the second VTSI 91A are recorded in the corresponding areas, respectively.

In the case that the determination of the above described step S15 is performed again and a new recording processing is not started (step S15; NO), then, it is checked whether or not a termination processing (so-called finalizing processing) should be carrier out again (step S16). When it is determined that the termination processing should not be carried out (step S16; NO), the processing will be returned to the step S15. On the other hand, when it is determined that the termination processing should be carried out (step S16; YES), then, in the step 52, the volume information 4 in the DVD 1 (DVD video standard) , the file system information 5, the above VMCI 2A composing the video manager 2 and the information corresponding to the VOBS 2B for a menu and the backup VMGI 2C are recording in the above first recording zone 98, of which reservation is secured. After that, sixth managing data (not shown) for indicating the positions of respective recording areas is recorded in the forth managing data small area MD4 in a sixth managing data area 116₋₆ in the managing data area 112 to close the first recording zone 98 (step S18). Then, the above start information to be recorded in the lead-in area LIA and the above termination information to be recorded in the lead-out area LOA are recorded (step S19), so that all recording processing are completed.

Only after the processing to this step S18 are completed, the recording processing of the recording information along a real time in the DVD-R 1R by the recording format based on the DVD video standard is completed as shown in the first diagram from the right in FIG. 8B. Therefore, it becomes possible to reproduce the recording information recorded on the DVD-R 1R by using the information reproducing apparatus for reproducing the recording information on the DVD for reproduction only based on the DVD video standard. Alternatively, unless the recording of the volume information 4, the file system information 5 and the like in the first recording zone 98 are completed, it is not possible to reproduce the information in the above described information reproducing apparatus.

As described above , according to the information recording processing in the information reproducing apparatus S in the present embodiment, the encoding rate of the recording information is uniformed and further, the required time for reproduction of the VOB unit 30 is determined as a constant unit time (0.5 second). At the same time, the recording information is recorded in the DVD-R 1R with the number of the VOB units 30 included in the VOB 10 being fixed to "60", so that it becomes possible to generate and record the address information in the navi pack 41 in advance to indicate the recording information which has not been recorded yet. Therefore, it becomes possible to carry out the information recording along with a real time in the DVD-R 1R based on the recording format in the DVD video standard, which does not presuppose the information along with a real time while generating the address information with a simple processing and forming the VOB unit 30.

Alternatively, the address information including the recording position of back and for the VOB unit 30 is generated to be contained in one VOB unit 30, so that the recording information is capable of being recorded so that the reproduction processing on the basis of the address information is possible.

Further, since the recording format in the DVD-R 1R is based on the DVD video standard, it is possible to reproduce the information recorded in the DVD-R in the information reproducing apparatus for reproducing a disc for reproducing a DVD only, which starts to be popular.

According to the above described embodiment, a case such that the DVD-R 1R capable of recording only once is used as a recordable recording medium is described. However, in addition to this, the recording information may be recorded in the above described procedure by using the above described DVD-RW capable of recording in plural times as a recordable recording medium.

Further, a program corresponding to a flow chart shown in FIG. 7 is recorded in a flexible disc, a hard disc or the like as an information recording medium to be read out by using a personal computer or the like, so that it is also possible to operate the personal computer or the like as the above described system controller 125.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. An information recording apparatus (S) for recording information in a recordable recording medium (IR) in conformity to a recording format for a reproduction-only recording medium , **characterized in that** the apparatus comprises:
an encoding device (123) for encoding said information with a predetermined constant encoding rate and generating encoding information;
a converting device (125) for converting said generated encoding information into format information in conformity to said recording format; and
a recording device (120) for recording said converted format information in said recordable recording medium (1R);
wherein said converting device (125) comprising:
a unit information forming device (125) for dividing said encoding information and forming unit information so that required time for reproduction of said unit information after the unit information in said recording format is recorded in said recordable recording medium becomes a constant unit time corresponding to said encoding rate;
an upper unit information forming device (125) for forming upper unit information so that the number of said unit information, which is included in said upper unit information comprising a plurality of said unit information in said recording format, becomes a constant number corresponding to said unit time;
an address information generating device (125) for generating address information for indicating a recording position on said recordable recording medium of said unit information whose required time for reproduction is said unit time; and
a format information generating device (125) for generating said format information so that said generated address information is contained in said unit information.

2. The information recording apparatus (S) according to claim 1, wherein said address information generating device (125) generates said address information contained in said one unit information so as to indicate a recording position on said recordable recording medium (1R) of said other unit information to be reproduced back and forth of said one unit information.

3. The information recording apparatus (S) according to claim 1 or 2, wherein said recording format is a recording format in conformity to a DVD video standard, said recordable recording medium is a DVD-R (1R), said unit information is a VOBU (30) in said recording format, said upper unit information is a VOB (10) in said recording format, and said address information comprises a navigation pack in said recording format.

4. The information recording apparatus (S) according to claim 3, wherein said unit time is 0.5 second, and said constant number is 60.

5. An information recording method for recording information in a recordable recording medium (1R) in conformity to a recording format for a recording medium for reproduction only, the method comprising the processes of:
encoding said information with a predetermined constant encoding rate and generating encoding information;
converting said generated encoding information into format information in conformity to said recording format; and
recording said converted format information in said recordable recording medium;
wherein said process of converting said generated encoding information comprising the processes of:
dividing said encoding information and forming unit information so that the required time for reproduction of said unit information after the unit information in said recording format is recorded in said recordable recording medium becomes a constant unit time in association with said encoding rate;
forming upper unit information so that the number of said unit information, which is included in said upper unit information comprising a plurality of said unit information in said recording format, becomes a constant number corresponding to said unit time;
generating address information for indicating a recording position on said recordable recording medium of said unit information whose required time for reproduction is said unit time; and
generating said format information so that said generated address information contained in said unit information.

6. The information recording method according to claim 5, wherein, in said address information generating process, said address information contained in said one unit information is generated so as to indicate a recording position on said recordable recording medium of said other unit information to be reproduced back and forth of said present one unit information.

7. The information recording method according to claim 5 or 6, wherein said recording format is a recording format in conformity to a DVD video standard, said recordable recording medium is a DVD-R (1R), said unit information is a VOBU (30) in said recording format, said upper unit information is a VOB (10) in said recording format, and said address information comprises a navigation pack in said recording format.

8. An information recording medium, in which a recording control program is recorded capable of being read by a recording computer, for functioning said recording computer included in an information recording apparatus (S) for recording information in a recordable recording medium (1R) in conformity to a recording format for a recording medium for reproduction only, the recording control program causing the recording computer to function as:
an encoding device (123) for encoding said information with a predetermined constant encoding rate and generating encoding information;
a converting device (125) for converting said generated encoding information into format information in conformity to said recording format; and
a recording device (120) for recording said converted format information in said recordable recording medium;
wherein said converting device (125) comprising:
a unit information forming device (125) for dividing said encoding information and forming unit information so that the required time for reproduction of said unit information after the unit information in said recording format is recorded in said recordable recording medium becomes a constant unit time corresponding to said encoding rate;
an upper unit information forming device (125) for forming said upper unit information so that the number of said unit information, which is included in said upper unit information comprising a plurality of said unit information in said recording format, becomes a constant number in association with said unit time;
an address information generating device (125) for generating address information for indicating a recording position on said recordable recording medium of said unit information whose required time for reproduction as said unit time; and
a format information generating device (125) for generating said format information so that said generated address information is contained in said unit information.

9. The information recording medium according to claim 8, wherein said address information generating device (125) generates said address information contained in said one unit information so as to indicate a recording position on said recordable recording medium of said other unit information to be reproduced back and forth of said present one unit information .

10. The information recording medium according to claim 8 or 9, wherein said recording format is a recording format in conformity to a DVD video standard, said recordable recording medium is a DVD-R (1R), said unit information is a VOBU (30) in said recording format, said upper unit information is a VOB (10) in said recording format, and said address information comprises a navigation pack in said recording format.
